# EUROPEAN PATENT SPECIFICATION

(11) **EP 1 616 784 B1**
(45) Date of publication and mention of the grant of the patent: **12.03.2008**
(21) Application number: 05076627.8
(22) Date of filing: 15.07.2005
(51) Int. Cl.: B63B 43/06, B63B 35/73

(54) **Floatable construction**
Schwimmende Konstruktion
Construction flottante

(30) Priority: 15.07.2004 NL 1026667
(43) Date of publication of application: 18.01.2006
(73) Proprietor: Voskamp, Hein Douwinus, 7601 GK Almelo (NL)
(72) Inventor: Voskamp, Hein Douwinus, 7601 GK Almelo (NL)
(74) Representative: Schumann, Bernard Herman Johan

(56) References cited:
- EP-A- 0 015 352
- WO-A-96/06003
- WO-A-96/22426
- DE-A1- 4 002 028
- US-A- 3 322 087
- US-A- 6 165 371

## Description

The invention relates to a floatable construction.

A floatable construction is understood to mean a boat, a floatable building structure, such as a houseboat, comprising a container serving as float, a building placed on a container, for instance a house, a business premises or the like. Such generally known constructions float on open water. The invention also relates to constructions which are for instance suitable for ensuring that the functional elements, for instance a building structure, are not disrupted by a varying groundwater level.

The invention relates to a floatable construction, comprising:
at least one set of first and second ballast tanks disposed on either side of a first centre plane of the construction;
transport means for transporting water selectively to and from each of the first and second ballast tanks such that by means of control means the horizontal position of the construction defined by these ballast tanks can be adjusted and adapted to a possibly changing state of loading of the construction.

Such a floatable construction is for instance known from US-A-6 073 573. According to this publication use is made of a computer-controlled balancing system, whereby the horizontal position of the construction is ensured at all times and does not depend on the state of loading of the construction.

The floatable construction according to the invention is characterized by collecting means for collecting rainwater and transporting thereof via the transport means to the ballast tanks;
a central third ballast tank disposed substantially symmetrically relative to said centre plane which via the transport means receives water from the first and second ballast tanks;
first pump means for pumping water out of the third ballast tank to first selection means;
a water treatment plant which connects with its inlet to the first selection means and which has a first outlet for treated water and at least one second outlet for waste products, sludge, oil, grease and the like.

According to the invention a coupling is made between the water system of which said ballast tanks form part and the so-called grey water system connected to the collecting means for rainwater. Grey water is understood to mean untreated water, for instance rainwater, which, while not being highly contaminated, must nevertheless be deemed in principle to be unsuitable for human consumption. So-called black water is relatively highly contaminated water which is normally drained to a sewer and fed via the sewage system to a central water treatment system for purification there.

The measures according to the invention have many advantages.

A first advantage can be deemed substantially an economic advantage:
By combining a grey water circuit with said balancing system and the ballast system to be described hereinbelow, it is possible to save on materials in that the diverse components in the system have a dual function. The ballast tanks, in addition to their function as ballast and balancing, will thus also serve as collector and reservoir for rainwater. An additional advantage is that the ballast tanks are flushed by the rainwater, and optionally by surface water or mains water during periods of low rainfall. A frequently occurring problem of so-called dead water in tanks can in this way be effectively prevented.

A further advantage is an environmental advantage:
By combining a grey water circuit with a balancing and ballast system it is possible to save on materials, which is good for the environment in that less material is after all used. Coupling of said systems to the water treatment plant has the result that the chance of contaminated water being discharged into the surface water is reduced to a minimum. An example is the use of the grey water system and the water treatment on a floating road or other paved structure. A road is subject to contamination as a result of the passage of cars which leave traces of oil and rubber on the road surface. In the case of rainwater, the water contaminated with oil and rubber particles would, without the use of a grey water circuit, disappear directly into the surface water and into the groundwater. If only the grey water system were to be applied, the contaminated water would have to be regularly sucked up and discharged. By coupling the grey water system to the water treatment plant, in this embodiment comprising in particular an oil separator and a grease trap, only the oil and grease are collected and the relatively clean water purified by the water treatment plant can be drained. This results in a less frequent need to discharge contamination and waste that have accumulated in the contaminated water tank.

In the case of a floating construction intended for accommodation of people, a coupling of the grey water and balancing circuit to the water treatment plant has the advantage that, in the absence of a sewer connection ashore, the contaminated water does not have to be drained directly into the water. The grey water is first used in facilities suitable for that purpose, such as a washing machine, a toilet, a connection for a garden hose, and the like. The black water, coming particularly from toilet, washing-up, washing, shower and bath facilities, is then guided through the water treatment plant. In this plant the water is purified to a level such that it can be reused and ultimately satisfies rigorous standards, whereby it may be drained to the surface water. This produces the environmental advantage that contaminated water is not drained directly to the surface water, and the use of clean mains water can be limited to a minimum.

Application of the grey water system in combination with the ballast and balancing system results in enhancement of the water storage, for instance in the Netherlands. In the case of rainfall, water is no longer drained directly, but stored and used. This results in a better water management and a more constant water runoff in a region.

Reference is made to DE-C-40 02 028. A stabilizing system for ships is known from this publication. This system makes use of a system of communicating vessels, the arms of which are mutually connected by pump means. By driving these pump means in the one or the other direction a possible aberration of the ship from the horizontal position can, on the basis of signals from measuring sensors, be compensated by a central control unit by appropriate energizing of the pump means. On the basis of the described basic system according to the invention, an aberration from a horizontal position can be compensated and corrected with only one degree of freedom.

According to a further aspect of the invention, the floatable construction comprises:
at least one set of fourth and fifth ballast tanks disposed on either side of the second centre plane of the construction extending in transverse direction relative the first centre plane, wherein the transport means are adapted to transport water selectively to and from each of the fourth and fifth ballast tanks such that by means of control means the horizontal position of the construction defined by the fourth and fifth ballast tanks can be adjusted and adapted to a possibly changing state of loading.

According to another aspect of the invention, the floatable construction has the special feature that the control means are adapted to set the net buoyancy and/or the draught of the construction to a value chosen by a user by removing water from the tanks and draining thereof or by admitting water from outside into the tanks.

Attention is drawn in this respect to US-A-6 165 371 from which is known an apparatus for setting the buoyancy and draught of a floatable construction as desired by means of a system of ballast tanks to be selectively filled and emptied. The combination according to the invention is however not known from this publication, nor is it made self-evident thereby.

The international patent application WO-A-96/22 426 relates to a flotation system for buildings. The combination of a ballast and balancing system with rainwater collection and water treatment plant is not known either from this publication, nor is it made self-evident thereby.

According to a further aspect of the invention, the floating construction has the special feature that the construction is adapted for accommodation of people, and comprises for instance a floatable building which is suitable for habitation and/or a business, or is embodied as a boat or the like, and the first outlet of the water treatment plant feeds back purified water via a return conduit to the third ballast tank.

According to a further aspect of the invention, the floatable construction has the special feature that the construction is adapted for accommodation of people, and comprises for instance a floatable building which is suitable for habitation and/or a business, or is embodied as a boat or the like, and connecting to the first selection means is at least one consumer unit which is suitable for the use of untreated or so-called grey water, for instance a toilet, a washing machine or a garden hose.

In yet another embodiment, the floatable construction has the feature that contaminated water, so-called black water, from the or each consumer unit is fed to the water treatment plant via a second return conduit.

In most circumstances it is desirable to have available backup facilities for the supply of additional water in the case where the quantity of rainwater is inadequate for continuous operation of the system according to the invention. To this end the floating construction according to the invention can comprise: second pump means and second selection means connecting to the outlet thereof for feeding to at least one of the first to the fifth ballast tanks water coming from a source other than the collecting means, such as surface water, water from a water mains connection and/or water stored in the floatable construction.

In the basic setup of the invention with at least one set of ballast tanks and a balancing option with only one degree of freedom, the floating construction according to the invention can have the special feature that the control means comprise:
a computer;
first measuring means, for instance an electronic spirit level, for determining a first horizontal position of the construction and generating to the computer a signal representative thereof; and
second measuring means present in the ballast tanks, such as level sensors or floats, for measuring the level of the water in these ballast tanks and generating to the computer signals representative of these levels.

In the preferred embodiment, in which additional ballast tanks are available to compensate an inclining position in a direction independent of the first balancing direction, the floating construction according to the invention can have the special feature that the control means comprise:
a computer;
second measuring means for determining a horizontal position of the construction transversely of said first horizontal position, and generating to the computer a signal representative of this second position; and
third measuring means present in respectively the fourth and fifth ballast tanks, such as level sensors or floats, for measuring the level of the water in these ballast tanks and generating to the computer signals representative of these levels.

In order to prevent undesirable pressure build-up in the ballast tanks, and as protection against possible disasters, particularly in the case excess water is supplied to the ballast tanks, the floating construction according to the invention can have the special feature that an overflow/venting unit connects to at least a number of ballast tanks.

A system which in principle is technically simple and easy to operate by a user can be embodied such that the computer controls the first, the second selection means, the first pump means and/or the second pump means, and comprises an input unit for input of data by a user, for instance a keyboard with mouse or a special hand control panel, for the purpose of entering information relevant to the control of said components.

In a specific embodiment, the floating construction according to the invention has the special feature that the collecting means comprise a number of rain-pipes which also serve as supporting columns in a building structure. The rain-pipes can for instance be incorporated in a cavity wall of a building, and thus be invisible and support a roof construction and/or an additional floor.

It will be apparent that the rain-pipes must have an adequate structural strength and must be suitable from an environmental viewpoint. A suitable material is for instance stainless steel. With this aspect the advantage is also obtained that a material-saving results, and further that an aesthetic improvement in the appearance of the construction can be achieved.

According to yet another aspect of the invention, the floating construction can have the special feature that baffle plates are placed in at least a number of the ballast tanks. Due to the slowing effect of baffle plates on water, the floating construction hereby has less of a tendency to make bumpy movements.

According to a final aspect of the invention, the floating construction can have the special feature that the construction comprises a preferably double-walled container of aluminium modified to the nominal use of the construction.

The described control system can be operated both manually and automatically with a computer. In the case of a manual-mechanical operation, use is made of taps or valves which can be operated either manually or by electrical means. In this case the floating construction must be brought manually to the correct level and in balance in horizontal position. This means that the relevant valves must be operated one by one. If an inclining position occurs again due to the displacing of a load on the floating construction, this must be corrected manually once again by operating the taps/valves. It will be apparent that in this respect an automatically operating system is preferred.

An overflow of the water out of the ballast tanks can be realized by means of a float or sensor system. An associated pump will be energized by electrical or electronic means when this is required. The necessity is determined by, among other factors, the level of the water in the ballast tanks. The necessity further occurs in the case of disasters and optionally the use of grey water facilities.

As stated above, it is recommended that the level and the horizontal position in both directions is controlled fully automatically. Applied for this purpose is a computer with associated software which control the level and the horizontal position of the floating construction. When an inclining position is detected in the system by a system suitable for the purpose, for instance an electronic spirit level system or level sensors present in the tanks, the valves and pumps will be operated on the basis of the control signals therefrom, which can be for instance pneumatic, electric or mechanical. Such a control is also performed in the case of disaster and the need for overflow in the case of excessive supply of water.

There now follows, in anticipation of the description of the drawings hereinbelow, a summary description of a number of components of the floating construction according to the invention.

The floats or sensors measure the level in the ballast tanks and generate a signal when the quantity of water in these tanks is too large or too small. The signals are transmitted to a mechanical or an electronic system which is adapted to provide appropriate action.

The water conduits provide for transport of grey and black water. The choice of the material depends on the requirements and wishes of the designers and users. It will be apparent that the chosen materials must comply with current regulations, in particular environmental regulations, and with standards of structural nature.

The ballast tanks serve both to regulate the floating level of the floating construction and the horizontal balancing thereof, and as reservoir for grey or clean water.

The ballast tanks can be embodied in diverse materials depending on the requirements and wishes of the designers and users. It will be apparent from the foregoing that the chosen materials must however be suitable for application in grey water systems.

The dimensions of the tanks depend on the dimensions and the weight of the floating construction and on the distribution of the mass thereof. The volume of the ballast tanks, and thereby the capability for level control and horizontal balancing of the tanks, must therefore be determined by the designer subject to the relevant specific parameters.

The valves/taps can be given an electrical, magnetic or pneumatic form, but also be hand-operated. It will be apparent that, in the case of an automatically operating system, preference will generally be given to electrically controllable valves/taps, also in respect of the specific application and the requirements and wishes of the designer and user.

The water treatment plant has the function of purifying the contaminated grey and black water to a level at which the water can be discharged or reused for specific purposes. The type of water treatment plant depends on the application for which it must be used and the available technique. A household or other facility intended and suitable for human habitation will thus require for instance a so-called IBA system or an equivalent system having among others a biological cleaning function, while below a road construction or other paved construction there is more of a need for a water treatment which traps grease and separates oil from the water.

Use can be made of a waste tank which collects and stores waste products, sludge, contamination and the like up to the point at which these substances are discharged for processing. These waste products are for instance residues from the water treatment system which cannot be further processed or purified by the system itself. Oil, grease, rubber particles from car tyres, waste sludge can be particularly envisaged here. The material of the waste tank depends on the type of substances, contamination and waste to be stored therein, and the concentrations thereof.

The invention will now be elucidated on the basis of the accompanying drawings of a number of exemplary embodiments, to which the invention is not limited. In the drawing:
Fig. 1A shows a partly cut-away perspective view of a part of a floatable house;
Fig. 1B shows mutually co-acting coupling means for fixing gangways to the floatable house of Fig. 1A;
Fig. 2 shows a cross-section through a floating body which is provided with a cylindrical keel extending in longitudinal direction;
Fig. 3 shows a view corresponding to Fig. 2 of a modular combination of floating bodies according to Fig. 2 on which building structures are arranged;
Fig. 4 shows a view corresponding to Fig. 3 of a variant with provisions for supporting a car and a swimming pool;
Fig. 5 shows a further variant corresponding to Fig. 4 which supports a garden instead of a swimming pool;
Fig. 6 shows a block diagram of the water system of a floatable construction according to the invention which is intended and adapted for accommodation of people;
Fig. 7 shows a block diagram of the water system of a floatable construction according to the invention which is intended and adapted for roads and other paved structures; and
Fig. 8 shows a block diagram of a computer control for the systems of Fig. 6 and 7.

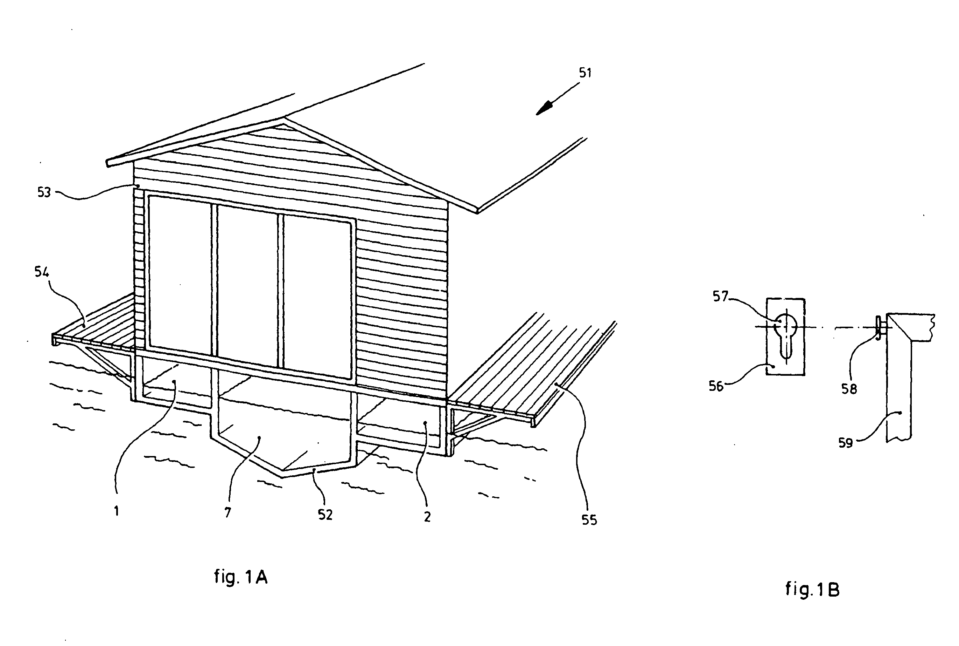

Fig. 1A shows a floatable construction 51, comprising a double-walled floating body 52 manufactured from aluminium plate and a house 53 supported thereby. The house is provided on either side with gangways 54, 55 respectively which are coupled to floating body 52 in the manner shown in Fig. 1B.

Fig. 1B shows a fixing plate 56 with a generally keyhole-like hole 57 which serves for hooking in of a toadstool-shaped element 58 fixed to a support 59 of a gangway 54, 55.

It will be apparent that by using a number of registered fixing elements of the type according to Fig. 1B the gangways can be readily placed and removed.

In the shown cut-away position, floating body 52 has a first ballast tank 1, a second ballast tank 2 and a third ballast tank 7 disposed centrally between these ballast tanks 1, 2.

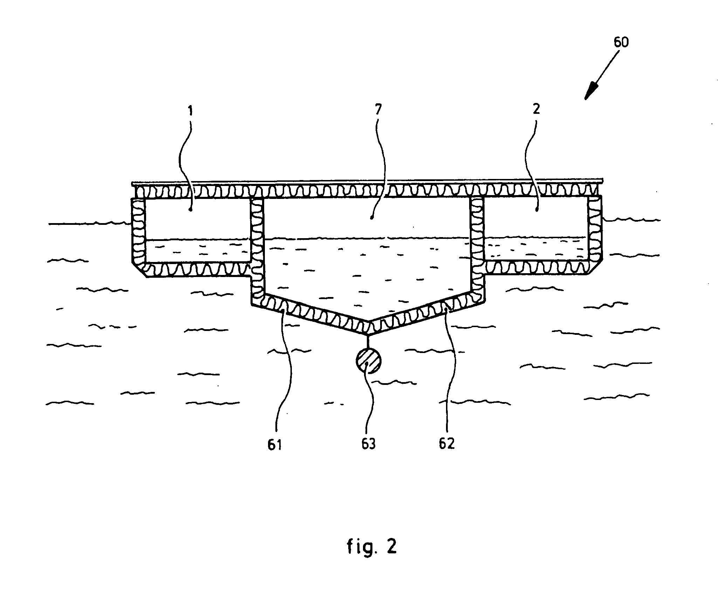

Fig. 2 shows a floating body 60 on a larger scale than floating body 52 of Fig. 1A. For the purpose of an improved stability, this floating body is provided with a keel 63 on its underside, i.e. the lowest part of the lower wall 61, 62 of the central ballast tank 7. This keel is embodied as a cylindrical mass, for instance an aluminium tube, which extends over a substantial part of the length of ballast tank 7 and which is provided with a heavy filling, for instance sand, and is then closed sealingly.

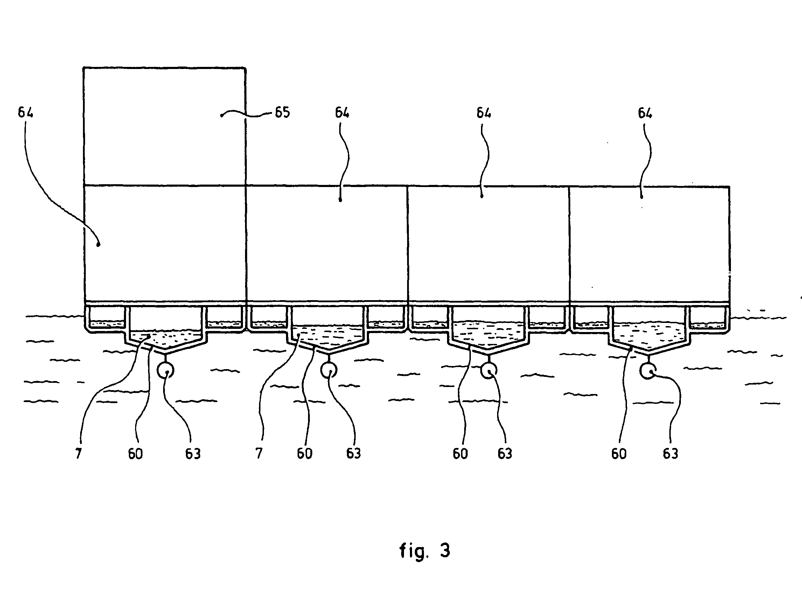

Fig. 3 shows a modular assembly of four floating bodies which are mutually coupled and thus form an integral floatable construction. In this embodiment a building structure 64 is placed on each of the floating bodies 60. The building structure 64 furthest to the left in the drawing supports a second building structure 65. Because the total structure will tend to have a greater draught on the left-hand side in the drawing when the building structures 64 have the same weight, by means of provisions according to the invention to be described below the ballast tank 7 in question is filled with less water than the adjacent ballast tank 7, which in turn is also filled to a slightly lower level than the following ballast tank. Thus is ensured that the structure has a horizontal position.

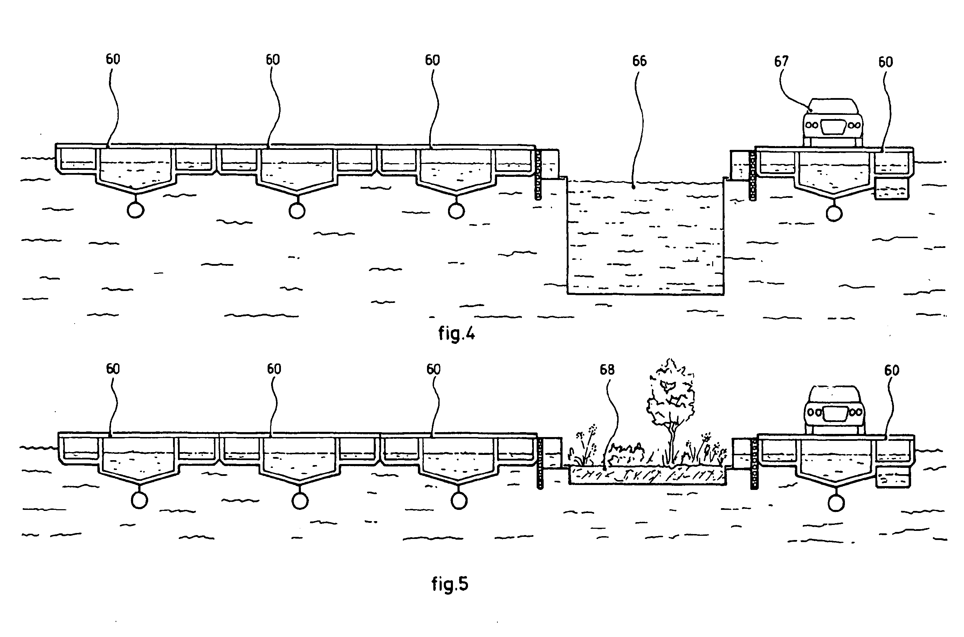

Fig. 4 shows that a number of floating bodies 60 support a swimming pool 66. The three left-hand floating bodies 60 are suitable for supporting structures to be further determined, for instance building structures, recreation facilities such as a sports floor, a lawn or the like, while the right-hand floating body 60 is suitable for supporting cars 67. The right-hand floating body 60 can be coupled in its lengthwise direction to similar floating bodies and thus form for instance a paved floatable road.

Fig. 5 shows a similar application wherein however the swimming pool 66 is replaced by another recreation facility such as a garden or the like.

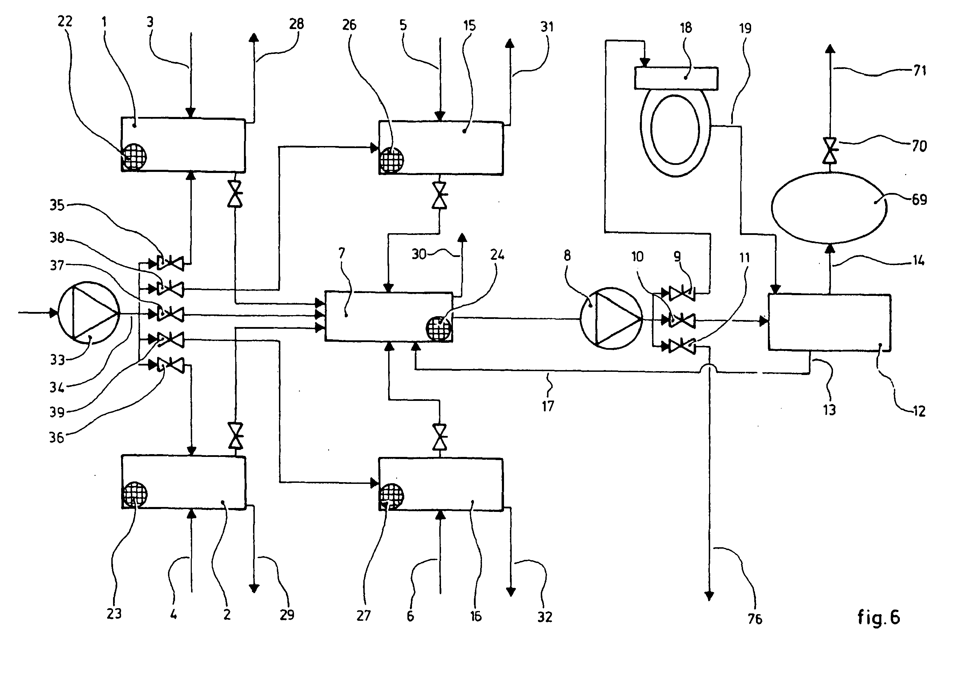

The essential aspects of the invention will now be considered with reference to Fig. 6, 7 and 8.

Fig. 6 shows in the form of a block diagram the water circuits of a floatable construction, for instance a floatable house, a ship or other facility suitable for accommodating people.

Fig. 6 shows that the floatable construction 51 comprises:
at least one set of first and second ballast tanks 1, 2 disposed on either side of a first centre plane of the construction;
transport means for transporting water selectively to and from each of the first and second ballast tanks 1, 2 such that by means of control means 20, 21, 22, 23 the horizontal position of construction 51 defined by these ballast tanks 1, 2 can be adjusted and adapted to a possibly changing state of loading of construction 51.

The floatable construction further comprises:
collecting means 3, 4, 5, 6 for collecting rainwater and transporting thereof via the transport means to ballast tanks 1, 2;
a central third ballast tank 7 disposed substantially symmetrically relative to said centre plane which via the transport means receives water from the first and second ballast tanks 1, 2;
first pump means 8 for pumping water out of the third ballast tank 7 to first selection means 9, 10, 11; and
a water treatment plant 12 which connects with its inlet to the first selection means 8 and which has a first outlet 13 for treated water and at least one second outlet 14 for waste products, sludge, grease, oil and the like.

The construction further comprises at least one set of fourth and fifth ballast tanks 15, 16 disposed on either side of the second centre plane of the construction extending in transverse direction relative to the first centre plane, wherein the transport means are adapted to transport water selectively to and from each of the fourth and fifth ballast tanks 15, 16 such that by means of control means 20, 25, 26, 27 the horizontal position of the construction defined by the fourth and fifth ballast tanks 15, 16 can be adjusted and adapted to a possibly changing state of loading.

The control means are adapted to set the net buoyancy and/or the draught of the construction to a value chosen by a user by removing water from the tanks and draining thereof or by admitting water from outside into the tanks.

In the present exemplary embodiment the construction 51 is adapted for accommodation of people, and comprises the building 53 which is suitable for habitation or a business. In respect of this application, the first outlet 13 of water treatment plant 12 feeds back purified water via a return conduit 17 to the third ballast tank 7. Also connecting to first selection means 9, 10, 11 is at least one consumer unit 18, such as a washing machine, a shower, bath, toilet or connection for a garden hose, this consumer unit 18 being suitable for the use of untreated or grey water. Contaminated water from the or each consumer unit 18, which is designated as black water, is fed to water treatment plant 12 via a second return conduit 19.

The construction also comprises a second pump 33 and second selection means 35, 36, 37, 38, 39 connecting to the outlet 34 thereof for feeding to at least one of the first to the fifth ballast tanks 1, 2, 7, 15, 16 water coming from a source other than collecting means 3, 4, 5, 6, such as surface water, water from a water mains connection and/or water stored in the floatable construction.

The embodiment drawn in Fig. 6 comprises control means, whereby it can operate fully automatically. These control means comprise:
a computer 20;
first measuring means 21, for instance an electronic spirit level, for determining a first horizontal position of the construction and generating to computer 20 a signal representative thereof; and
second measuring means 22, 23, 24 present in the first, second and third ballast tanks 1, 2, 3, such as level sensors or floats, for measuring the level of the water in these ballast tanks 1, 2, 3 and generating to computer 20 signals representative of these levels.

The control means also comprise:
second measuring means 25, 26, 27 for determining a horizontal position of the construction transversely of said first horizontal position, and generating to computer 20 a signal representative of this second position; and
third measuring means 26, 27 present in respectively the fourth and fifth ballast tanks 15, 16, such as level sensors or floats, for measuring the level of the water in these ballast tanks 15, 16 and generating to computer 20 signals representative of these levels.

Respective overflow valves/venting unit 28, 29, 30, 31, 32 connect to ballast tanks 1, 2, 7, 15, 16.

An outlet 14 for waste products and other contaminants such as sludge and the like connects to water treatment plant 12. These are stored temporarily in a waste tank 69. This latter is emptied at regular intervals by opening a valve 70 and arranging a suction line 71.

Connecting to valve 11, which forms part of the first selection means, is an outlet 76 which serves for discharge of excess water in the case of overflow or imminent overflow due to excess water.

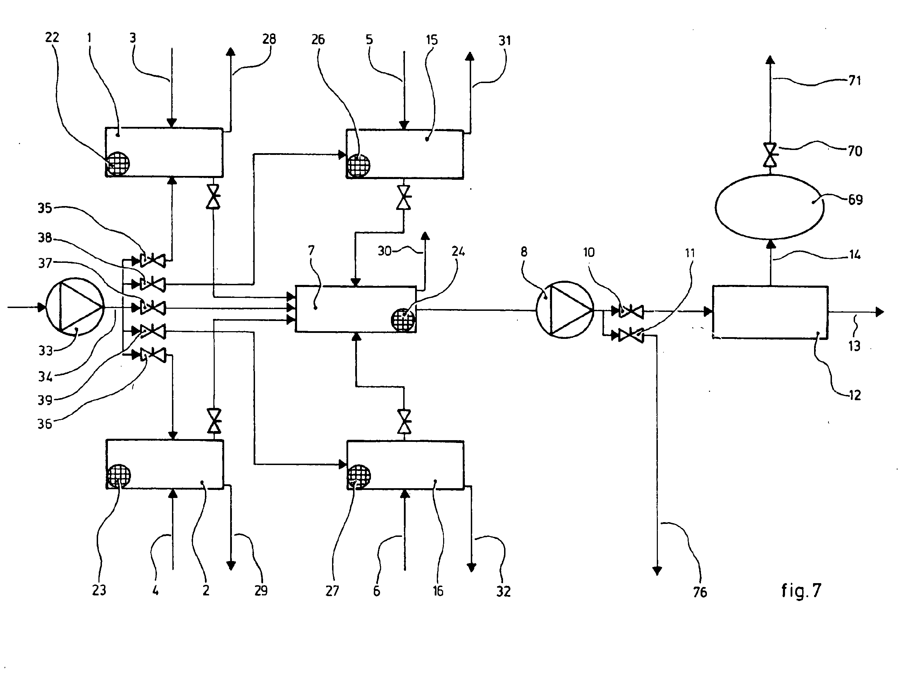

The embodiment according to Fig. 7 is intended for paved floating constructions, in particular paved structures on which it is possible to travel, such as motorways. The valve 9 forming part of the first selection means and the facilities 18, as well as sewer water pipe 19, are omitted in this embodiment. Return conduit 17 between water treatment plant 12 and third ballast tank 7 is also absent. The water treatment is adapted substantially for storing for instance small rubber particles in tank 69, trapping oil and grease and temporary storage thereof such that the waste products can be discharged at a suitable moment.

The embodiments of Fig. 6 and 7 further have in common that computer 20 controls first selection means 9, 10, 11, second selection means 35, 36, 37, 38, 39, first pump means 8 and/or second pump means 33, and comprises an input unit 40 for inputting of data by a user, for instance a keyboard with mouse or a special hand control panel, for entering information relevant to the control of said components.

The computer further receives data from level sensors 22, 23, 24, 26, 27 and on the basis thereof controls first pump 8, second pump 33, outlet valves 72, 73, 74, 75 of the respective ballast tanks 1, 2, 15, 16, valves 9, 10, 11 which form the first selection means, and valves 35, 36, 37, 38, 39 which together form the second selection means.

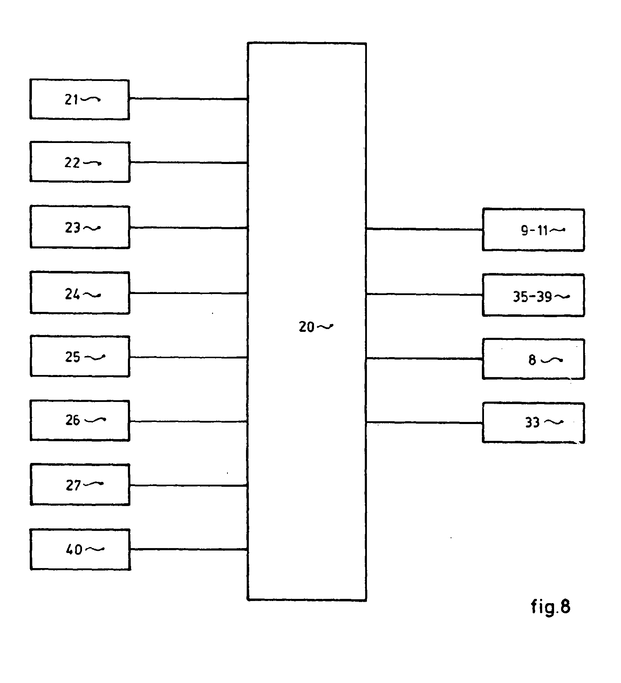

Finally, Fig. 8 shows a block diagram of the computer, which receives input information from an electronic spirit level 21 operating in two independent directions, level sensors 22, 23, 24, 26, 27 and the manual input unit 40. On the basis hereof the computer controls valves 9, 10, 11 of the first selection means, valves 35, 36, 37, 38, 39 of the second selection means, first pump 8 and second pump 33 which, in accordance with the chosen construction, can draw in for instance surface water, mains water or stored water and feed it to second selection means 35, 36, 37, 38, 39. A user can supply relevant information, for instance the desired draught, to the computer by means of an input unit 40.

## Claims

1. Floatable construction (51), comprising:
at least one set of first and second ballast tanks (1, 2) disposed on either side of a first centre plane of the construction;
transport means for transporting water selectively to and from each of the first and second ballast tanks (1, 2) such that by means of control means (20, 21, 22, 23) the horizontal position of the construction defined by these ballast tanks (1, 2) can be adjusted and adapted to a possibly changing state of loading of the construction;
**characterized by:**
collecting means (3, 4, 5, 6) for collecting rainwater and transporting thereof via the transport means to the ballast tanks (1, 2);
a central third ballast tank (7) disposed substantially symmetrically relative to said centre plane which via the transport means receives water from the first and second ballast tanks (1, 2);
first pump means (8) for pumping water out of the third ballast tank (7) to first selection means (9, 10, 11); and
a water treatment plant (12) which connects with its inlet to the first selection means (9, 10, 11) and which has a first outlet (13) for treated water and at least one second outlet (14) for waste products, sludge, oil, grease and the like.

2. Floatable construction (51) as claimed in claim 1, comprising:
at least one set of fourth and fifth ballast tanks (15, 16) disposed on either side of the second centre plane of the construction extending in transverse direction relative to the first centre plane, wherein the transport means are adapted to transport water selectively to and from each of the fourth and fifth ballast tanks (15, 16) such that by means of control means (20, 25, 26, 27) the horizontal position of the construction defined by the fourth and fifth ballast tanks (15, 16) can be adjusted and adapted to a possibly changing state of loading.

3. Floatable construction (51) as claimed in claim 1, wherein the control means (20-27, 40, 9-11, 35-39, 8, 33) are adapted to set the net buoyancy and/or the draught of the construction to a value chosen by a user by removing water from at least one tank (1, 2, 7, 15, 16) and draining thereof or by admitting water from outside into the tanks.

4. Floatable construction (51) as claimed in claim 1, wherein the construction (51) is adapted for accommodation of people, and comprises for instance a floatable building (53) which is suitable for habitation and/or a business, or is embodied as a boat or the like, and the first outlet (13) of the water treatment plant (12) feeds back purified water via a return conduit (17) to the third ballast tank (7).

5. Floatable construction (51) as claimed in claim 1, wherein the construction (51) is adapted for accommodation of people, and comprises for instance a floatable building (53) which is suitable for habitation and/or a business, or is embodied as a boat or the like, and connecting to the first selection means (9, 10, 11) is at least one consumer unit (18) which is suitable for the use of untreated or so-called grey water, for instance a toilet, a washing machine or a garden hose.

6. Floatable construction (51) as claimed in claim 5, wherein contaminated water, so-called black water, from the or each consumer unit (18) is fed to the water treatment plant (12) via a second return conduit (19).

7. Floatable construction (51) as claimed in claim 1, comprising second pump means (33) and second selection means (35, 36, 37, 38, 39) connecting to the outlet (34) thereof for feeding to at least one of the first to the fifth ballast tanks (1, 2, 7, 15, 16) water coming from a source other than the collecting means (3, 4, 5, 6), such as surface water, water from a water mains connection and/or water stored in the floatable construction.

8. Floatable construction (51) as claimed in claim 1, wherein the control means comprise:
a computer (20);
first measuring means (21), for instance an electronic spirit level, for determining a first horizontal position of the construction and generating to the computer (20) a signal representative thereof; and
second measuring means (22, 23, 24) present in the ballast tanks (1, 2, 3), such as level sensors or floats, for measuring the level of the water in these ballast tanks (1, 2, 3) and generating to the computer (20) signals representative of these levels.

9. Floatable construction (51) as claimed in claim 2, wherein the control means comprise:
a computer (20);
second measuring means (25, 26, 27) for determining a horizontal position of the construction transversely of said first horizontal position, and generating to the computer (20) a signal representative of this second position; and
third measuring means (26, 27) present in respectively the fourth and fifth ballast tanks (15, 16), such as level sensors or floats, for measuring the level of the water in these ballast tanks (15, 16) and generating to the computer (20) signals representative of these levels.

10. Floatable construction (51) as claimed in any of the foregoing claims, wherein an overflow/venting unit (28, 29, 30, 31, 32) connects to at least a number of ballast tanks (1, 2, 7, 15, 16).

11. Floatable construction (51) as claimed in any of the claims 8-11, wherein the computer (20) controls the first selection means (9, 10, 11), the second selection means (35, 36, 37, 38, 39), the first pump means (8) and/or the second pump means (33), and comprises an input unit (40) for inputting of data by a user, for instance a keyboard with mouse or a special hand control panel, for the purpose of entering information relevant to the control of said components.

12. Floatable construction (51) as claimed in claim 1, wherein the collecting means comprise a number of rain-pipes which also serve as supporting columns in a building structure.

13. Floatable construction (51) as claimed in any of the foregoing claims, wherein baffle plates are placed in at least a number of the ballast tanks (1, 2, 7, 15, 16).

14. Floatable construction (51) as claimed in any of the foregoing claims, wherein the construction comprises a preferably double-walled container of aluminium modified to the nominal use of the construction.

## Patentansprüche

1. Schwimmkonstruktion (51), umfassend:
zumindest einen Satz von ersten und zweiten Ballasttanks (1, 2), die auf beiden Seiten einer ersten Mittelebene der Konstruktion angeordnet sind;
Transportmittel zum wahlweisen Transportieren von Wasser zu und von jedem der ersten und zweiten Ballasttanks (1, 2), so dass mit Hilfe von Steuermitteln (20, 21, 22, 23) die durch diese Ballasttanks (1, 2) definierte horizontale Stellung der Konstruktion eingestellt werden kann und an einen sich möglicherweise verändernden Ladezustand der Konstruktion angepasst werden kann;
**gekennzeichnet durch**:
Sammelmittel (3, 4, 5, 6) zum Sammeln von Regenwasser und Transportieren desselben über die Transportmittel zu den Ballasttanks (1, 2);
ein mittiger dritter Ballasttank (7), der im wesentlichen symmetrisch zu der Mittelebene angeordnet ist und der über die Transportmittel Wasser aus dem ersten und zweiten Ballasttank (1, 2) empfängt;
erste Pumpmittel (8) zum Pumpen von Wasser aus dem dritten Ballasttank (7) zu ersten Auswahlmitteln (9, 10, 11); und
eine Wasserbehandlungsanlage (12), deren Einlass mit dem ersten Auswahlmittel (9, 10, 11) verbunden ist und die einen ersten Auslass (13) für behandeltes Wasser und zumindest einen zweiten Auslass (14) für Abfallprodukte, Schlamm, Öl, Fett und ähnliches aufweist.

2. Schwimmkonstruktion (51) gemäß Anspruch 1, umfassend:
zumindest einen Satz von vierten und fünften Ballasttanks (15, 16), die auf beiden Seiten der zweiten, sich in Bezug auf die erste Mittelebene in Querrichtung erstreckenden Mittelebene der Konstruktion angeordnet sind, wobei die Transportmittel dazu ausgelegt sind, Wasser wahlweise zu und von jedem der vierten und fünften Ballasttanks (15, 16) zu transportieren, so dass mit Hilfe der Steuermittel (20, 25, 26, 27) die durch den vierten und fünften Ballasttank (15, 16) definierte horizontale Stellung der Konstruktion eingestellt werden kann und an sich möglicherweise ändernde Ladezustände angepasst werden kann.

3. Schwimmkonstruktion (51) gemäß Anspruch 1, wobei die Steuermittel (20-27, 40, 9-11, 35-39, 8, 33) dazu ausgelegt sind, den Netto-Auftrieb und/oder den Tiefgang der Konstruktion auf einen von einem Nutzer ausgewählten Wert einzustellen, indem Wasser aus zumindest einem Tank (1, 2, 7, 15, 16) entfernt wird und daraus abgelassen wird oder indem Wasser von außen in die Tanks eingelassen wird.

4. Schwimmkonstruktion (51) gemäß Anspruch 1, wobei die Konstruktion (51) für die Unterbringung von Menschen ausgelegt ist und beispielsweise ein Schwimmgebäude (53) umfasst, das zum Wohnen und/oder für Geschäftszwecke geeignet ist, oder als Boot oder Ähnliches ausgeführt ist, wobei der erste Auslass (13) der Wasserbehandlungsanlage (12) gereinigtes Wasser über eine Rückführleitung (17) zu dem dritten Ballasttank (7) zurückführt.

5. Schwimmkonstruktion (51) gemäß Anspruch 1, wobei die Konstruktion (51) für die Unterbringung von Menschen ausgelegt ist und beispielsweise ein Schwimmgebäude (53) umfasst, das zum Wohnen und/oder für Geschäftszwecke geeignet ist, oder als Boot oder Ähnliches ausgeführt ist, wobei mit den ersten Auswahlmitteln (9, 10, 11) zumindest eine Verbrauchereinheit (18) verbunden ist, die geeignet ist für die Verwendung von unbehandeltem oder sogenanntem Grauwasser, wie beispielsweise eine Toilette, eine Waschmaschine oder ein Gartenschlauch.

6. Schwimmkonstruktion (51) gemäß Anspruch 5, bei der verunreinigtes Wasser, sogenanntes Schwarzwasser, von der oder jeder Verbrauchereinheit (18) über eine zweite Rückführleitung (19) zu der Wasserbehandlungsanlage (12) geführt wird.

7. Schwimmkonstruktion (51) gemäß Anspruch 1, umfassend zweite Pumpmittel (33) und zweite Auswahlmittel (35, 36, 37, 38, 39), die mit deren Auslass (34) verbunden sind, um Wasser, das von einer anderen Quelle als den Sammelmitteln (3, 4, 5, 6) stammt, wie beispielsweise Oberflächenwasser, Wasser von einer Wasserhauptleitung und/oder Wasser, das in der Schwimmkonstruktion gespeichert ist, zu zumindest einem der ersten bis fünften Ballasttanks (1, 2, 7, 15, 16) zuzuführen.

8. Schwimmkonstruktion (51) gemäß Anspruch 1, wobei die Steuermittel umfassen:
einen Computer (20);
erste Messmittel (21), beispielsweise eine elektronische Wasserwaage, zum Bestimmen einer ersten horizontalen Stellung der Konstruktion und zum Erzeugen eines Signals an den Computer (20), das diese wiedergibt; und
zweite Messmittel (22, 23, 24), die in den Ballasttanks (1, 2, 3) angeordnet sind, wie beispielsweise Füllstandssensoren oder Schwimmer, zum Messen des Wasserstands in diesen Ballasttanks (1, 2, 3) und zum Erzeugen von Signalen an den Computer (20), die diese Füllstände wiedergeben.

9. Schwimmkonstruktion (51) gemäß Anspruch 2, wobei die Steuermittel umfassen:
einen Computer (20);
zweite Messmittel (25, 26, 27) zum Bestimmen einer horizontalen Stellung der Konstruktion quer zur erwähnten ersten horizontalen Stellung und zum Erzeugen eines Signals an den Computer (20), das diese zweite Stellung wiedergibt; und
dritte Messmittel (26, 27), die jeweils im vierten und fünften Ballasttank (15, 16) angeordnet sind, wie beispielsweise Füllstandssensoren oder Schwimmer, zum Messen des Wasserfüllstands in diesen Ballasttanks (15, 16) und zum Erzeugen von Signalen an den Computer (20), die diese Füllstände wiedergeben.

10. Schwimmkonstruktion (51) gemäß einem der vorhergehenden Ansprüche, bei der eine Überlauf-/Entlüftungseinheit (28, 29, 30, 31, 32) mit zumindest einer Anzahl der Ballasttanks (1, 2, 7, 15, 16) verbunden ist.

11. Schwimmkonstruktion (51) gemäß einem der Ansprüche 8 bis 11, bei der der Computer (20) die ersten Auswahlmittel (9, 10, 11), die zweiten Auswahlmittel (35, 36, 37, 38, 39), die ersten Pumpmittel (8) und/oder die zweiten Pumpmittel (33) steuert und eine Eingabeeinheit (40) zum Eingeben von Daten durch einen Nutzer umfasst, beispielsweise eine Tastatur mit einer Maus oder eine spezielle Handbedienungs-Steuereinheit zum Zwecke des Eingebens von Informationen, die für die Steuerung der Komponenten relevant sind.

12. Schwimmkonstruktion (51) gemäß Anspruch 1, wobei die Sammelmittel eine Anzahl von Regenleitungen umfassen, die zugleich als Stützsäulen in einer Gebäudestruktur dienen.

13. Schwimmkonstruktion (51) gemäß einem der vorhergehenden Ansprüche, wobei in zumindest einer Anzahl der Ballasttanks (1, 2, 7, 15, 16) Leitbleche angeordnet sind.

14. Schwimmkonstruktion (51) gemäß einem der vorhergehenden Ansprüche, wobei die Konstruktion einen vorzugsweisen doppelwandigen Behälter aus Aluminium umfasst, der an die bestimmungsgemäße Verwendung der Konstruktion angepasst ist.

## Revendications

1. Construction flottante (51), comprenant :
au moins un ensemble de premier et deuxième réservoirs de ballast (1, 2) disposés de chaque côté d'un premier plan central de la construction ;
des moyens de transport pour transporter de l'eau sélectivement vers et provenant de chacun des premier et deuxième réservoirs de ballast (1, 2) de sorte qu'au moyen des moyens de commande (20, 21, 22, 23) la position horizontale de la construction définie par ces réservoirs de ballast (1, 2) peut être ajustée et adaptée à un état de changement possible de charge de la construction ;
**caractérisée par** :
des moyens de collecte (3, 4, 5, 6) pour collecter l'eau de pluie et son transport via les moyens de transport jusqu'aux réservoirs de ballast (1, 2) ;
un troisième réservoir de ballast central (7) disposé de manière sensiblement symétrique par rapport audit plan central qui, via les moyens de transport, reçoit l'eau des premier et deuxième réservoirs de ballast (1, 2) ;
des premiers moyens de pompe (8) pour pomper l'eau du troisième réservoir de ballast (7) jusqu'aux premiers moyens de sélection (9, 10, 11) ; et
une usine traitement des eaux (12) qui se raccorde avec son entrée aux premiers moyens de sélection (9, 10, 11) et qui a une première sortie (13) pour les eaux traitées et au moins une seconde sortie (14) pour les produits de déchet, la boue, l'huile, la graisse et similaires.

2. Construction flottante (51) selon la revendication 1, comprenant :
au moins un ensemble de quatrième et cinquième réservoirs de ballast (15, 16) disposés de chaque côté du second plan central de la construction s'étendant dans la direction transversale par rapport au premier plan central, dans laquelle les moyens de transport sont adaptés pour transporter l'eau de manière sélective vers et de chacun des quatrième et cinquième réservoirs de ballast (15, 16) de sorte qu'au moyen des moyens de commande (20, 25, 26, 27) la position horizontale de la construction définie par les quatrième et cinquième réservoirs de ballast (15, 16) peut être ajustée et adaptée à un état de changement éventuel de charge.

3. Construction flottante (51) selon la revendication 1, dans laquelle les moyens de commande (20-27, 40, 9-11, 35-39, 8, 33) sont adaptés pour déterminer la flottaison nette et/ou le tirant d'eau de la construction à une valeur choisie par un utilisateur en retirant l'eau d'au moins un réservoir (1, 2, 7, 15, 16) et son évacuation ou en admettant l'eau de l'extérieur dans les réservoirs.

4. Construction flottante (51) selon la revendication 1, dans laquelle la construction (51) est adaptée pour loger des gens, et comprend par exemple un bâtiment flottant (53) qui est approprié pour l'habitation et/ou des bureaux, ou est mis en oeuvre sous la forme d'un bateau ou similaire, et la première sortie (13) de l'usine de traitement des eaux (12) réalimente de l'eau purifiée via un conduit de retour (17) au troisième réservoir de ballast (7).

5. Construction flottante (51) selon la revendication 1, dans laquelle la construction (51) est adaptée pour loger des gens, et comprend par exemple un bâtiment flottant (53) qui est approprié pour l'habitation et/ou des bureaux, ou est mis en oeuvre sous la forme d'un bateau ou similaire, et le raccordement aux premiers moyens de sélection (9, 10, 11) est au moins une unité de consommation (18) qui est appropriée pour l'utilisation des eaux non traitées ou des dénommées eaux grises, par exemple des toilettes, d'une machine à laver ou d'un tuyau d'arrosage.

6. Construction flottante (51) selon la revendication 5, dans laquelle l'eau contaminée, la dénommée eau noire, provenant de la ou chaque unité de consommation (18) est alimentée à l'usine de traitement des eaux (12) via un second conduit de retour (19).

7. Construction flottante (51) selon la revendication 1, comprenant des seconds moyens de pompe (33) et des seconds moyens de sélection (35, 36, 37, 38, 39) se raccordant à leur sortie (34) pour l'alimentation du au moins un premier au cinquième réservoir de ballast (1, 2, 7, 15, 16) de l'eau provenant d'une source différente des moyens de collecte (3, 4, 5, 6), telle que l'eau de surface, l'eau provenant du raccordement au réseau d'eau et/ou l'eau stockée dans la construction flottante.

8. Construction flottante (51) selon la revendication 1, dans laquelle les moyens de commande comprennent :
un ordinateur (20) ;
des premiers moyens de mesure (21) par exemple un niveau d'esprit électronique, pour déterminer une première position horizontale de la construction et générer à l'ordinateur (20) son signal représentatif ; et
des deuxièmes moyens de mesure (22, 23, 24) présents dans les réservoirs de ballast (1, 2, 3) tels que des capteurs de niveau ou des flotteurs, pour mesurer le niveau de l'eau dans ces réservoirs de ballast (1, 2, 3) et générer à l'ordinateur (20) des signaux représentatifs de ces niveaux.

9. Construction flottante (51) selon la revendication 2, dans laquelle les moyens de commande comprennent :
un ordinateur (20) ;
des deuxièmes moyens de mesure (25, 26, 27) pour déterminer une position horizontale de la construction de manière transversale à ladite première position horizontale, et générer à l'ordinateur (20) un signal représentatif de cette seconde position ; et
des troisièmes moyens de mesure (26, 27) présents respectivement dans les quatrième et cinquième réservoirs de ballast (15, 16), tels que des capteurs de niveau ou des flotteurs, pour mesurer le niveau d'eau dans ces réservoirs de ballast (15, 16) et générer à l'ordinateur (20) des signaux représentatifs de ces niveaux.

10. Construction flottante (51) selon l'une quelconque des revendications précédentes, dans laquelle une unité de trop-plein / d'évacuation (28, 29, 30, 31, 32) se raccorde au moins à un certain nombre de réservoirs de ballast (1, 2, 7, 15, 16).

11. Construction flottante (51) selon l'une quelconque des revendications 8 à 11, dans laquelle l'ordinateur (20) commande les premiers moyens de sélection (9, 10, 11), les seconds moyens de sélection (35, 36, 37, 38, 39), les premiers moyens de pompe (8) et/ou les seconds moyens de pompe (33), et comprend une unité d'entrée (40) pour l'introduction des données par un utilisateur, par exemple un clavier avec une souris ou un panneau de commande manuelle spécial, afin d'entrer l'information concernant la commande desdits composants.

12. Construction flottante (51) selon la revendication 1, dans laquelle les moyens de collecte comprennent un certain nombre de tuyaux de descente d'eaux pluviales qui servent également de colonnes de support dans une structure de bâtiment.

13. Construction flottante (51) selon l'une quelconque des revendications précédentes, dans laquelle on place des plaques de déflecteur dans au moins un certain nombre des réservoirs de ballast (1, 2, 7, 15, 16).

14. Construction flottante (51) selon l'une quelconque des revendications précédentes, dans laquelle la construction comprend de préférence un récipient à double paroi d'aluminium modifié par rapport à l'usage nominal de la construction.
